# EUROPÄISCHE PATENTSCHRIFT

(11) **EP 0 899 493 B1**
(45) Veröffentlichungstag und Bekanntmachung des Hinweises auf die Patenterteilung: **07.11.2001**
(21) Anmeldenummer: 98114446.2
(22) Anmeldetag: 01.08.1998
(51) Int. Cl.: F16L 5/08, H02G 3/22

(54) **Dichtpackung zum Einsetzen in eine Maueröffnung zwecks Durchführen von Leitungen**
Cable/pipe feedthrough for use in a wall opening
Traversée de câble/tuyaux pour une ouverture dans un mur

(30) Priorität: 22.08.1997 DE 19736494
(43) Veröffentlichungstag der Anmeldung: 03.03.1999
(73) Patentinhaber: Hauff-Technik GmbH & Co. KG, 89542 Herbrechtingen (DE)
(72) Erfinder: Heck, Martin, 89447 Zöschingen (DE)
(74) Vertreter: Dr. Weitzel & Partner

(56) Entgegenhaltungen:
- WO-A-96/25616
- DE-A- 1 940 855
- DE-A- 19 601 288

## Beschreibung

Die Erfindung betrifft eine Dichtpackung zum Einsetzen in eine Maueröffnung zwecks Durchführen von Leitungen. Als Leitungen kommen sowohl Energie- und Telefonkabel als auch Rohrleitungen für fliessfähige Medien wie Wasser oder Gas in Betracht.

Eine solche Vorrichtung ist aus DE 38 28 693 C1 bekannt geworden.

Eine solche Dichtpackung umfasst eine Dichtscheibe aus gummielastischem Material mit einem kreisförmigen Umfang, femer Presselemente, die beidseits der Dichtscheibe angeordnet sind und die die Dichtscheibe sandwichartig zwischen sich einschliessen. Durch die gesamte Dichtpackung sind ferner Zugstäbe hindurchgeführt, mit denen die beiderseitigen Presselemente verspannt werden können, so daß die Dichtscheibe gequetscht wird, wodurch sich deren Aussendurchmesser vergrössert, so daß sich die Dichtscheibe an die Mauerlaibung anlegt.

Das Einbauen der Vorrichtung geht wie folgt vor sich:

Zunächst wird die Dichtpackung in den Mauerdurchbruch eingesetzt und darin fixiert. Anschliessend werden die Leitungen durch die Bohrung der Dichtpackung hindurchgeführt. Die Spannschrauben werden zunächst nicht gespannt, so daß die Dichtscheibe auch noch nicht zusammengequetscht wird. Sodann werden die Spannschrauben zum Zwecke des Fixierens der Dichtpackung angezogen.

Die Montage einer solchen Dichtpackung kann in der Praxis problematisch sein. So gibt es zahlreiche Fälle, in denen die Dichtpackung nicht unmittelbar in eine Maueröffnung eingesetzt wird, sondern unter Zwischenfügung einer Hülse, beispielsweise aus gespritztem Kunststoff. Siehe beispielsweise DE 196 49 499 A. Dort weist die Hülse einen nach innen ragenden Bund auf, der über seinen Umfang unterbrochen ist. Die Spannscheiben der Dichtpackung sind mit Ausbuchtungen versehen. Zum Zwecke der Vormontage wird die Dichtpackung derart verdreht, daß die Ausbuchtungen der Spannscheibe gerade an jenen Stellen liegen, an denen der Bund unterbrochen ist, so daß die Dichtpackung bis zu Ihrer Soll-Position in die Hülse hineingeschoben und sodann verspannt werden kann.

Die genannte Ausführungsform erleichtert die Montage von Dichtpackungen zwar gegenüber früheren Ausführungsformen, ist jedoch noch verbesserungsfähig. Der Erfindung liegt daher die Aufgabe zugrunde, eine Dichtpackung gemäß dem Oberbegriff von Anspruch 1 derart zu gestalten, daß die Montage noch weiter erleichtert wird, ohne zusätzlichen baulichen Aufwand.

Diese Aufgabe wird durch die Merkmale von Anspruch 1 gelöst.

Die Erfindung ist anhand der Zeichnungen näher erläutert. Darin ist im einzelnen folgendes dargestellt:
Figur 1 zeigt eine Dichtpackung in eingebautem Zustand in einem Axialschnitt, mit hindurchgeführter Rohrleitung und mit der Mauer, in die sie eingesetzt ist.
Figur 2 zeigt die Dichtscheibe in einer Draufsicht.
Figur 3 zeigt wiederum die eingebaute Dichtpackung von Figur 1 in einer Draufsicht, jedoch ohne Rohrleitungen und ohne Mauer.
Figur 4 zeigt die Dichtpackung von Figur 3 in einer Seitenansicht.
Figur 5 zeigt die Dichtpackung in eingezogenem Zustand.
Figur 6 ist wiederum eine Ansicht einer Dichtpackung in eingebautem Zustand mit Mauer und Rohrleitung, und zwar bei einem besonderen Einbaufall.

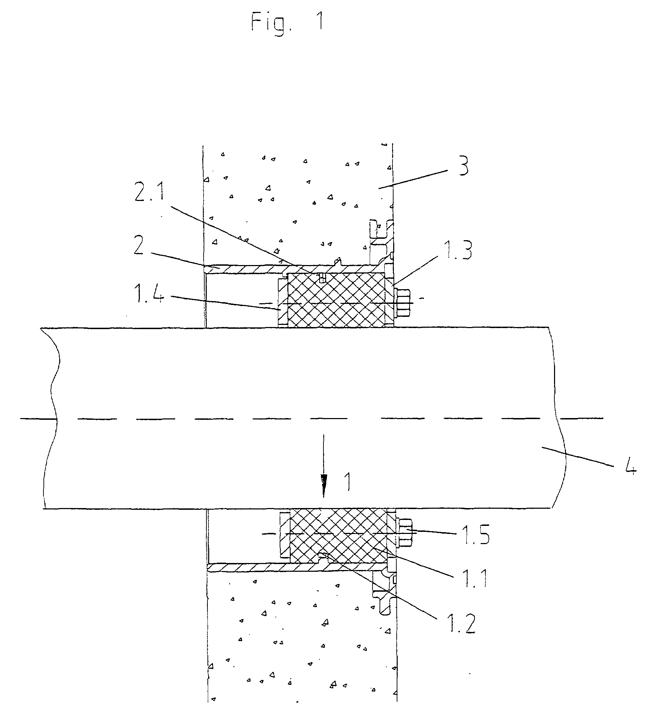

Die in Figur 1 dargestellte Dichtpackung 1 umfasst einen Dichtring 1.1 aus gummielastischem Werkstoff. Der Ring 1.1 ist mit einer Umfangsnut 1.2 versehen. Er ist beidseits eingehüllt von Ringsegmenten 1.3, 1.4. Eine Mehrzahl von Spannschrauben 1.5 sind über den Umfang der Dichtpackung gleichmässig verteilt angeordnet.

Die Dichtpackung sitzt in einer Hülse aus Kunststoff. Die Hülse weist an ihrer Innenseite einen umlaufenden Bund 2.1 auf, der in die Umfangsnut 1.2 eingreift. Der Bund 2.1 kann unterbrochen oder geschlossen sein.

Die Hülse 2 ist in eine Betonmauer 3 eingegossen. Die Dichtpackung 1 umschliesst eine Rohrleitung 4 zum Hindurchführen von Gas.

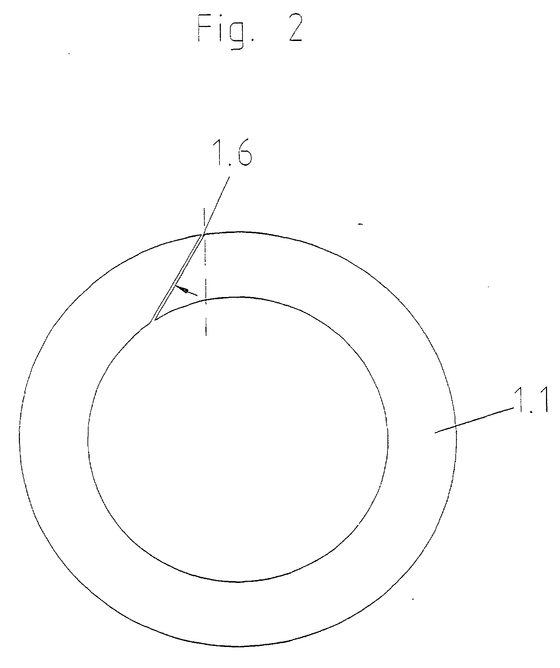

In Figur 2 ist der Dichtring 1.1 für sich alleine dargestellt. Man erkennt, daß er eine Trennfuge 1.6 aufweist. Die Trennfuge ist, wie man sieht, gegen die Radialebene geneigt. Im vorliegenden Falle beträgt der Neigungswinkel etwa 45°. Es sind jedoch auch andere Winkel denkbar, beispielsweise 10, 20, 30, 40, 50, 60, 70°.

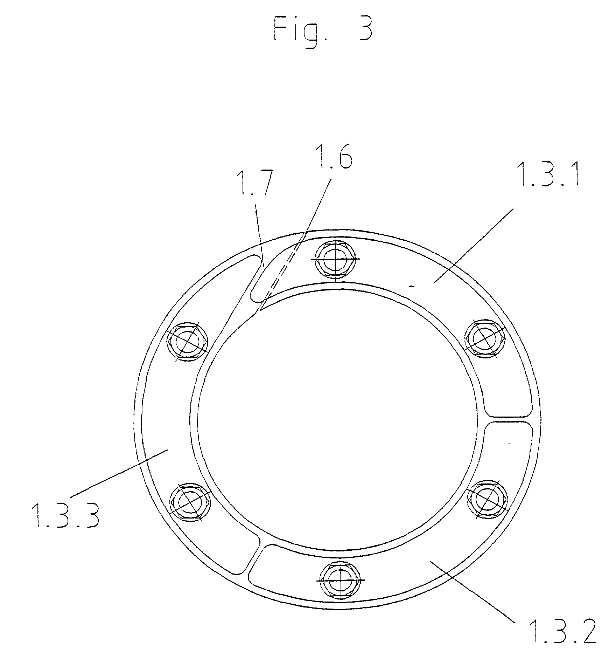

Figur 3 ist eine Draufsicht auf die gesamte Dichtpackung. Wie man sieht, befinden sich auf der hier dargestellten Seite drei Ringsegmente 1.3.1, 1.3.2 und 1.3.3. Die Ringsegmente auf der gegenüberliegenden Seite sind formidentisch mit den hier vorliegenden und liegen in der Projektion an derselben Stelle.

Analog zur Trennfuge 1.6 in dem Dichtring 1.1 verläuft eine Trennfuge 1.7 zwischen den beiden Ringsegmenten 1.3.1, 1.3.3. Die Trennfuge 1.6 in dem Dichtring 1.1, hier gestrichelt eingezeichnet, verläuft, wie man sieht, im Bereich der Trennfuge 1.7. Die beiden Trennfugen können auch zusammenfallen. Die Neigungswinkel, die die beiden Trennfugen mit der betreffenden Radialebene einschliessen, können gleich sein. Es ist aber auch möglich, den Winkel, den die Trennfuge 1.6 mit der Radialebene bildet, größer oder kleiner zu machen, als denjenigen, den die Trennfuge 1.7 mit der betreffenden Radialebene bildet.

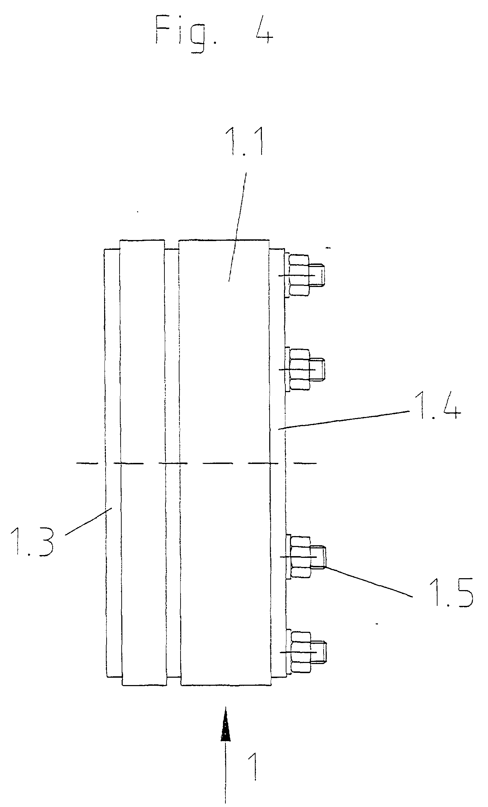

Figur 4 dient nur der allgemeinen Erläuterung.

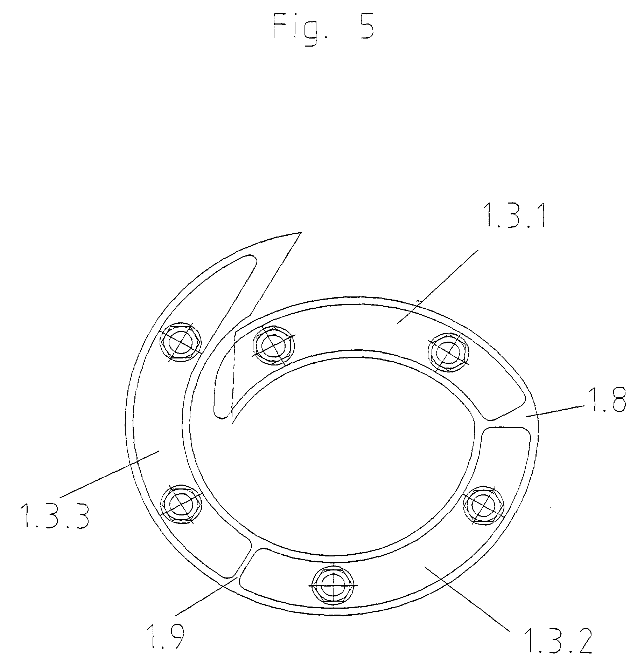

Figur 5 ist sehr aufschlussreich, da sie den Vorgang der Montage veranschaulicht. Wie man sieht, ist aufgrund der Trennfugen 1.6 des Dichtringes 1.1 und der Trennfuge 1.7 zwischen den betreffenden Ringsegmenten eine Verbiegung der gesamten Dichtpackung 1 möglich, und zwar um eine imaginäre, momentane Biegeachse 1.8, die parallel zur Längsachse der Dichtpackung 1 verläuft und zwischen den Ringsegmenten 1.3.1 und 1.3.2. liegt. Nach dem Verbiegen oder Einziehen des einen Astes der Dichtpackung um die Biegeachse 1.8 kann ein Verbiegen um eine weitere imaginäre momentane Biegeachse 1.9 vorgenommen werden. Diese befindet sich zwischen den Ringsegmenten 1.3.2 und 1.3.3. Figur 5 zeigt jenen Zustand, in dem erst der eine Ast eingezogen ist, nicht aber der zweite.

Jedenfalls wird durch die besondere Lage und durch die besondere Gestalt der Trennfugen der Gesamtdurchmesser der Dichtpackung verkleinert, nicht aber vergrössert, so daß die Dichtpackung bei ihrem Einschieben in eine Öffnung, beispielsweise in eine Hülse mit einem nach innen vorspringenden Bund, verkleinert werden kann und somit Engstellen überbrückt. Im Falle der genannten Hülse mit dem nach innen vorspringenden Bund wird die Dichtpackung 1 auf diese Weise soweit verschoben, bis die oben erwähnte Umfangsnut 1.2 des Dichtringes 1.1 dem Bund 2.1 der Hülse 2 gegenüberliegt. Sodann werden die Verbiegungen um die Biegeachsen 1.8, 1.9 wieder rückgängig gemacht, so daß die Dichtpackung ihre kreisrunde Gestalt wieder annimmt. Nunmehr kann die Dichtpackung durch Anziehen von Muttern auf den Spannschrauben 1.5 zusammengequetscht werden, so daß die äussere Mantelfläche der Dichtscheibe 1.1 an der Innenfläche der Hülse 2 satt und unter Spannung anliegt.

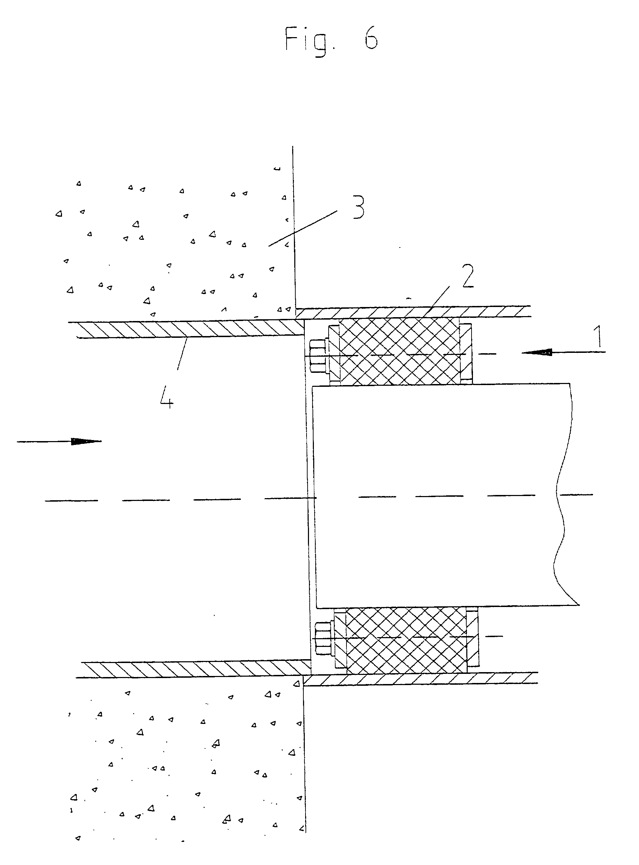

Figur 6 zeigt einen interessanten Anwendungsfall, bei dem auch eine Engstelle vorhanden ist. Wie man sieht, muß die Dichtpackung 1 durch ein Rohr 4 oder Kernbohrung geschoben werden, das eine relativ geringe lichte Weite bzw. eine Verengung hat.

## Patentansprüche

1. Dichtpackung zum Einsetzen in eine Maueröffnung zwecks Durchführens von Leitungen durch eine Wand.
1.1 mit einem Dichtring (1.1) aus gummielastischem Material mit kreisförmigem Aussenumfang;
1.2 mit beidseits des Dichtringes (1.1) vorgesehenen Presselementen (1.3, 1.4), die den Dichtring (1.1) sandwichartig zwischen sich einschliessen und als Ringsegmente gestaltet sind:
1.3 mit Zugstäben (1.5), durch den Dichtring (1.1) und durch die Ringsegmente (1.3, 1.4) hindurchgeführt sind;
1.4 der Dichtring (1.1) ist in Umfangsrichtung durchtrennt;
1.5 die Trennfuge (1.6) verläuft unter einem Winkel gegen die Radialebene;
1.6 die Trennfuge (1.6) des Dichtringes (1.1) ist - in Draufsicht - an die Stirnseite der Dichtpackung (1) gesehen; im Bereich einer Fuge (1.7) zwischen zwei Ringsegmenten (1.3.1; 1.3.3) angeordnet;
1.7 Es sind wenigstens zwei weitere Trennfugen zwischen den Ringsegmenten vorgesehen.

2. Dichtpackung nach Anspruch 1, **dadurch gekennzeichnet, daß** beidseits des Dichtringes drei Ringsegmente (1.3.1, 1.3.2, 1.3.3) vorgesehen sind.

3. Vorrichtung nach Anspruch 1 oder 2, **dadurch gekennzeichnet, daß** die Ringsegmente im wesentlichen gleich lang sind.

4. Dichtpackung nach einem der Ansprüche 1 bis 3, **dadurch gekennzeichnet, daß** die Trennfuge des Dichtringes unter einem Winkel von zwischen 10 und 60° vorzugsweise 45° gegen die Radialebene verläuft.

5. Vorrichtung nach einem der Ansprüche 1 bis 4, **dadurch gekennzeichnet, daß** im Bereich der Trennfuge (1.6) des Dichtringes (1.1) eine Trennfuge (1.7) zwischen zwei einander benachbarten Ringsegmenten (1.3.1 und 1.3.3) angeordnet ist.

6. Dichtpackung nach einem der Ansprüche 1 bis 5, **dadurch gekennzeichnet, daß** die beiden Trennfugen (1.6 und 1.7) wenigstens annähernd unter demselben Winkel zur Radialebene verlaufen.

7. Dichtpackung nach einem der Ansprüche 1 bis 6, **dadurch gekennzeichnet, daß** der Dichtring (1.1) eine Umfangsnut (1.2) zum Einführen eines Bundes (2.1) aufweist.

## Claims

1. A gland packing for insertion into a wall opening for the purpose of leading conduits through a wall;
1.1 with a packing ring (1.1) made of rubber-elastic material with a circular outside circumference;
1.2 with pressing elements (1.3, 1.4) which are provided on either side of the packing ring (1.1) and which enclose the packing ring (1.1) in a sandwich-like manner between themselves and are arranged as ring segments;
1.3 with tension bars (1.5) which are guided through the packing ring (1.1) and through the ring segments (1.3, 1.4);
1.4 with the packing ring (1.1) being severed in the circumferential direction;
1.5 with the parting line (1.6) extending under an angle against the radial plane;
1.6 with the parting line (1.6) of the packing ring (1.1) arranged in the zone of a joint (1.7) between two ring segments (1.3.1; 1.3.3), as seen in a top view of the face side of the gland packing (1);
1.7 with at least two further parting lines being provided between the ring segments.

2. A gland packing as claimed in claim 1, **characterized in that** three .ring segments (1.3.1, 1.3.2, 1.3.3) are provided on either side of the packing ring.

3. An apparatus as claimed in claim 1 or 2, **characterized in that** the ring segments are substantially of the same length.

4. A gland packing as claimed in one of the claims 1 to 3, **characterized in that** the parting line of the packing ring extends under an angle of between 10 and 60°, preferably 45°, against the radial plane.

5. An apparatus as claimed in one of the claims 1 to 4, **characterized in that** in the zone of the parting line (1.6) of the packing ring (1.1) an parting line (1.7) is disposed between two mutually adjacent ring segments (1.3.1 and 1.3.3).

6. A gland packing as claimed in one of the claims 1 to 5, **characterized in that** the two parting lines (1.6 and 1.7) extend at least approximately under the same angle to the radial plane.

7. A gland packing as claimed in one of the claims 1 to 6, **characterized in that** the packing ring (1.1) comprises a circumferential groove (1.2) for introducing a collar (2.1).

## Revendications

1. Garniture d'étanchéité à introduire dans une ouverture d'un mur en vue du passage de conduites à travers un mur,
1.1 avec un joint d'étanchéité (1.1) en matériau élastique caoutchouteux ayant une circonférence extérieure circulaire ;
1.2 avec des éléments de compression (1.3, 1.4) prévus de part et d'autre du joint d'étanchéité (1.1), qui enserrent le joint d'étanchéité (1.1) en sandwich entre eux et sont conformés comme des segments d'anneau ;
1.3 avec des barres de traction (1.5) qui sont passées à travers le joint d'étanchéité (1.1) et les segments d'anneau (1.3, 1.4) ;
1.4 le joint d'étanchéité (1.1)étant partagé dans le sens de la circonférence ;
1.5 la ligne de séparation (1.6) formant un angle par rapport au plan radial ;
1.6 la ligne de séparation (1.6) du joint d'étanchéité (1.1) étant disposée, en vue de dessus, sur la face frontale de la garniture d'étanchéité (1), au niveau d'une ligne de séparation (1.7) entre deux segments d'anneau (1.3.1 ; 1.3.3) ;
1.7 avec au moins deux autres lignes de séparation entre les segments d'anneau.

2. Garniture d'étanchéité selon la revendication 1, **caractérisée en ce que** trois segments d'anneau (1.3.1, 1.3.2, 1.3.3) sont prévus de part et d'autre du joint d'étanchéité.

3. Dispositif selon la revendication 1 ou 2, **caractérisé en ce que** les segments d'anneau sont de longueur sensiblement égale.

4. Garniture d'étanchéité selon l'une quelconque des revendications 1 à 3, **caractérisée en ce que** la ligne de séparation du joint d'étanchéité forme un angle de 10 à 60°, de préférence 45°, par rapport au plan radial.

5. Dispositif selon l'une quelconque des revendications 1 à 4, **caractérisée en ce qu'**une ligne de séparation (1.7) entre deux segments d'anneau voisins (1.3.1 et 1.3.3) est prévue au niveau de la ligne de séparation (1.6) du joint d'étanchéité (1.1).

6. Garniture d'étanchéité selon l'une quelconque des revendications 1 à 5, **caractérisée en ce que** les deux lignes de séparation (1.6 et 1.7) forment au moins approximativement le même angle par rapport au plan radial.

7. Garniture d'étanchéité selon l'une quelconque des revendications 1 à 6, **caractérisée en ce que** le joint d'étanchéité (1.1) présente sur sa circonférence une gorge (1.2) destinée à l'introduction d'un collier (2.1).
